Europäisches Patentamt

(19) European Patent Office

Office européen des brevets

(11) **EP 1 051 527 B1**

(12) **EUROPEAN PATENT SPECIFICATION**

(45) Date of publication and mention
of the grant of the patent:
**03.07.2002 Bulletin 2002/27**

(51) Int Cl.7: **C22B 7/00**, C22B 1/08,
A62D 3/00

(21) Application number: **99901864.1**

(22) Date of filing: **25.01.1999**

(86) International application number:
**PCT/IL99/00045**

(87) International publication number:
**WO 99/37823 (29.07.1999 Gazette 1999/30)**

(54) **HIGH EFFICIENCY RECOVERY PROCESS AND APPARATUS FOR THE PYROLYSIS TREATMENT AND HALOGENATION OF MULTI-ELEMENT WASTE**

VERFAHREN UND ANLAGE ZUR EFFIZIENTEN AUFARBEITUNG VON MULTI-ELEMENT ABFÄLLEN MITTELS PYROLYSE UND HALOGENIERUNG

PROCEDE DE RECUPERATION A HAUTE EFFICACITE ET APPAREIL POUR LE TRAITEMENT PAR PYROLYSE ET L'HALOGENATION DE DECHETS A ELEMENTS MULTIPLES

(84) Designated Contracting States:
**AT BE CH CY DE DK ES FI FR GB GR IE IT LI LU MC NL PT SE**

(30) Priority: **26.01.1998 IL 12306898**

(43) Date of publication of application:
**15.11.2000 Bulletin 2000/46**

(73) Proprietor: **Rosenberg, Ariel**
**Omer 84965 (IL)**

(72) Inventor: **Rosenberg, Ariel**
**Omer 84965 (IL)**

(74) Representative: **Moretti, Giorgio**
**Notarbartolo & Gervasi s.r.l.,**
**Corso di Porta Vittoria, 9**
**20122 Milano (IT)**

(56) References cited:
WO-A-95/22373          WO-A-95/33686
WO-A-97/29214          DE-A- 2 035 391
US-A- 4 317 800         US-A- 4 412 889
US-A- 5 550 312

• **VDI Berichte 1033, Techniken der Restmüllbehandlung, Dipl.-Ing. H.-U. Hartenstein and Dr.-Ing. W. Schumacher, "Anforderungen an die Anlagetechnik einer modernen Müllverbrennungsanlage sowie deren Umsetzung", Conference held in Würzburg,20-21 April 1993, VDI Verlag GmbH, Düsseldorf (Germany), p. 165,**
• **Chemical Dictionary, Grant & Hackh's, 5th edition, 1987, Mc Graw-Hill Book Company, New-York (USA), p. 130-131**

**Description**

## FIELD OF THE INVENTION

The field of the present invention is processes for treating and recovering a large variety of types of wastes via chemical treatment.

## BACKGROUND OF THE INVENTION

The present recovery and recycling industry must use a defined feed stock as raw material in order to be processed. As a result, the recovery industry must spend huge resources in sorting its wastes storing and warehousing. This is the main reason for the small quantity of waste which is actually being recycled, and the huge amount which is being dumped with catastrophic environmental effects.

Examples of the above are known and obvious, such as special scrap collectors, scrap yard dealers, for each segment of the industry - copper, aluminum, iron, steel, stainless steel, noble metal etc. in the recycling industry on the one hand, and the unlimited amount of waste being dumped by the society every day, on the other hand

However, the recycling industry is dedicated mainly to the industrial waste, which is well sorted and defined to each element. In the event that the scrap is made of different elements or metals, cheap labor is needed in order to dismantle the different components to the different metals. Examples are found in ship scrap, aircraft, cars and municipal waste. The main problem is, that this process requires cheap manpower that have to work in difficult and hazardous conditions. It has been proven in the developed countries, that manual or automated sorting and dismantling systems are usually not economically feasible and are therefore not a valid solution for treatment of most of the mixed waste.

Indeed many industries do address this issue by constructing equipment which makes recycling easy by use of the dismantling methods, such as used in the automobile industry etc. However, due to the use of many complex materials and the sophistication of parts it becomes almost impossible to re-use these parts or repair them.

The only system that treats unsorted waste, to any degree is the Municipal Incineration system, and even then, the waste must not be contaminated by industrial or Hazardous waste. In this system the waste is being introduced into furnaces and incinerated at elevated temperatures, where hot gases usually produce steam and or electricity. This system actually recovers only the energy of the organic matter via oxidation - incineration. All the inorganic waste remains as ash or sludge and is usually placed in a controlled landfill.

There are some other systems that have been developed to recover identified elements from identified feed stock - waste, via different systems, such as molten metals, extraction or chlorination methods. For example, Adelman et al. (Proc. Iowa Acad. Sci. (1980) 87 (4), pp129-133) discloses the production of aluminum chloride and silicon chloride from fly ash. In this system recovery of Al, Si, Fe, and Ti via chlorination reaction in a gas fluidized bed reactor is used, to convert the metal in the fly ash to volatile metal chlorides. The best yields are achieved when CO and fluid coke are used as reduction agents. Typically 0.5 - 2 hours of chlorination at temperatures of 750 - 900 degrees to produce volatile metal chlorides.

Burnet et al. (Univ. Ky., Inst. Min. Miner. Res., [Tech Rep.] IMMR (1997), IMMR 32-M4-77, Proc. - Ky. Coal Refuse Disposal Util. Semin., 3rd 83-8) discloses a high temperature chlorination method of recovering $Al_2O_3$ from the non-magnetic fraction of fly ash, in which the non-magnetic fraction of fly ash is mixed with C and chlorinated in a fixed bed. The residual Fe in the ash can be removed as volatile Fe chloride at 400-600°C, with very little Al and Si reaction. The temperature is than raised to 850-950°C where a mixture consisting mostly of volatile Al and Si chloride forms. When the vapors are cooled, solid $AlCl_3$ condenses at 120-50°C. The $SiCl_4$ remains in a vapor state due to its low condensation temp. The $SiCl_4$ can be easily decompounded to form $SiO_2$ and HCl from which the Cl is recycled.

WO 97/29214 discloses a process for the separation of metals from incinerated garbage residue and slag, the residue and slag from garbage incinerational pyrolysis being heated at over 650°C under reducing conditions together with substances containing chlorines or chlorides, such as flue gas cleaning residues, $CaCl_2$ from the production, cooking salt, organic solvents or electroplated sludge containing chlorine, whereupon copper chlorides and volatile heavy metal chlorides are drawn off in the gas phase.

USP 4,317,800 discloses a process for reducing environmental pollution resulting from disposal of waste-containing halogenated hydrocarbons by some simultaneous treatment with used metal and/or metal scrap at elevated temperatures. The halogenated hydrocarbons are pyrolized, and the resulting hydrogen halide-containing gas is brought into contact with the metal at elevated temperatures so as to form halogenites that are volatile under the conditions supplied.

WO 95/33686 discloses a method for extracting metals from metal-containing materials, especially waste, by pyrohydrolysis. The metal-containing materials are made to react at 700-1100°C, with a gas composition comprising 25-45% water vapor, 0.1% carbon dioxide, 2-20% hydrogen chloride and 0-15% carbon monoxide, the remainder being nitrogen and possibly oxygen, and the metals are extracted in the form of volatile metal chlorides.

WO 95/22373 discloses a method for removing pollutants consisting of heavy metals and toxic elements from fly ash and few purification residues resulting from waste incineration. The waste is subjected to chlorination, thermal treatment, sulfuration for the twofold purpose of the removal and concentration of a fraction containing heavy metals and toxic elements.

Most wastes contain more than one element and several unknown contaminates. Most wastes - contain both organic and non-organic elements.

The organic waste materials are in most cases a mixture of various chains of molecules together with various elements incorporated, as well as other non-organic materials, and are usually difficult in recycling, and they create environmental problems.

Chlorination of organic material can produce hazardous, toxic and cancerous elements.

It is a purpose of the present invention to provide a process for destruction of hazardous and/or toxic industrial waste in which the toxic and/or the hazardous compound waste is reduced into less toxic, or non toxic material, and/or less hazardous or non hazardous material, and the size and quantity of said waste is also reduced.

It is a further purpose of the present invention to provide a self-catalytic process in which the matter that exists in the compounded waste is converted and used as a catalyst in a subsequent reaction.

It is a further purpose of the present invention to provide an energy recycling process in which the energy produced by one chemical reaction is consumed in a subsequent chemical reaction.

It is a further purpose of the present invention to provide a wide range recycling process in which almost any waste can be treated: organic, non-organic, metallic or non-metallic, sorted or even unsorted.

It is a further purpose of the present invention to provide a recycling process suitable for recovering the basic elements of the waste introduced thereto, thus obtaining valuable and useful materials.

## SUMMARY OF THE INVENTION

The present invention relates to a high efficient recovery process for the treatment of multi-element wastes as given by claim 1.

The term "carbonization" used herein is defined as an operation in which organic material is subjected to high temperature in the presence of a limited amount of oxygen, resulting in the decomposition of said material, and affording, *inter alia*, carbon, CO and $CO_2$.

The heat treatment described in the above step "a" may be referred to hereinafter as "primary heat treatment".

Optionally, when necessary, the raw waste is mechanically prepared in a process which includes any of the steps of shredding, crushing, milling and briquetting, prior the step of primary heat treatment.

Preferably the primary heat treatment is performed at a temperature of less than about 1000°C.

Preferably, during the primary heat treatment, the waste is agitated.

The primary heat treatment is carried out in such a way that any one or more of the actions selected from the group which consists of evaporation of water and/or organic material, destruction and/or cracking of organic material, and reduction of metal oxides to metals and/or metal carbides, are achieved.

According to another embodiment of the present invention, the primary heat treatment is carried out under atmospheric pressure or higher pressures, optionally in the presence of gases, preferably hydrogen, capable of cracking the organic or inorganic material.

Preferably, the halogenation reaction is conducted with mechanical movement between the gaseous halogen and the waste, as fixed fluidized bed vibrating or in walking grid or in rotary kiln.

The halogenation reaction is a chlorination reaction, a bromination reaction or a combined chlorination-bromination reaction, and preferably a chlorination reaction.

Preferably, the halogenation reaction is performed at a temperature in the range between ambient temperature and 1500°C, more preferably between 700°C and 750°C.

Optionally, the halogenation temperature may vary according to the boiling or sublimation point of the metal halide products, as will be hereinafter explained.

Preferably, the separation of the halide products (step "c" above) is by means of any one or more, or any combination of operations selected from the group consisting of gaseous or liquid fractional deposition, distillation, filtration, selective chemical vapor deposition (hereinafter CVD), settling, selective oxidation, selective halogenation, selective dissolution and selective extraction, and more preferably by means of gaseous fractional deposition.

Optionally, when desired, the separation stage may be followed by a purification procedure for each of the separated products, to remove impurities therefrom.

Optionally, a portion of the heat energy possessed by the product material of the primary heat treatment may be used in the halogenation, e.g., said product of the primary heat treatment may be transferred from the primary heat treatment chamber to the halogenation chamber when hot, and the halogenation reaction may be started shortly afterwards, and thus it is required to heat the material of the halogenation reaction merely from the temperature which it is at, and is substantially higher than, e.g., room temperature.

The activation of metals in the halogenation reaction may be catalyzed by the introduction of the carbon produced during the primary heat treatment and/or of untreated flue-gas including e.g. bromine. carbon, CO, $CO_2$ and $SO_x$ and $NO_x$ compounds from the primary heat treatment chamber into the halogenation chamber.

The present invention further relates to an apparatus as given by claim 21 and by which such a recovery process is performed. It comprises a primary heat treatment chamber, a halogenation chamber and a separation unit; said primary heat treatment chamber comprises a waste inlet, a flue-gas outlet and means of heating, and is preferably connected to said halogenation chamber by means of a conduit, which comprises a valve; and said halogenation chamber comprises a means of controlled heating, a halogen inlet and optionally one or more outlets to withdrawn gas, liquid or solids therefrom; said apparatus further comprises a separation system comprises one or more of the following units, or any combination thereof, selected from the group consisting of fractional deposition unit, distiller, filter, CVD unit, settler, selective oxidation chamber, selective dissolution unit and selective halogenation system; said unit or units optionally being in contact with the outlet of said halogenator by means of a conduit.

Preferably, said separation system is a gaseous fractional deposition system and is connected to the outlet of said halogenator, by means of a conduit.

Preferably, said fractional deposition system comprises one or more deposition columns wherein each column comprises means of maintaining the temperature thereof at a pre-determined level; said fractional deposition system further comprising an outlet pipe.

According to another preferred embodiment of the present invention, the separation system is a CVD system comprising one or more heated or chilled elements allowing the deposition of the specific metal halide vapors thereon.

Preferably, said outlet pipe comprised in the fractional deposition system is connected directly to the halogenation chamber.

Optionally, said apparatus further comprises one or more units which can perform one or more actions selected from any of the group which consists of shredding, crushing, milling, sludge briquetting, feeding and dosing or any combination thereof, said unit being connected to the inlet of said primary heat treatment chamber and/or to the inlet of said halogenation chamber by means of a conduit.

Preferably, said apparatus further comprises an additional heat chamber, referred to hereinafter as secondary heat chamber, a heat exchanger, a scrubber a filter, a blower and a stack: said additional heat chamber comprising a means of heating, a gas inlet and an air inlet, and a flue gas outlet; said gas inlet of said secondary heat chamber being connected by means of a conduit to the flue gas outlet of said primary heat chamber; said heat exchanger comprising an inlet and an outlet; the flue gas outlet of said secondary heat chamber being connected by means of a conduit to the inlet of said heat exchanger; said scrubber comprising an inlet and an outlet; the outlet of said heat exchanger being connected, by means of a conduit to the inlet of said scrubber;

Preferably, said apparatus further comprises a filter, a blower and a stack; said filter comprising an inlet and an outlet; the outlet of said scrubber being connected, by means of a conduit to the inlet of said filter; said blower comprising an inlet and an outlet; the outlet of said filter being connected, by means of a conduit to the inlet of said blower; said stack comprising an inlet and an outlet; the outlet of said blower being connected, by means of a conduit to the inlet of said stack.

Preferably, said scrubber and said filter are connected to the halogenation chamber by means of conduits, to recycle material recovered and collected by said scrubber and filter to said halogenation chamber.


## DESCRIPTION OF THE INVENTION

The present invention relates to a high efficient process for the treatment of wastes which is applicable in treating mixtures of waste. Said mixtures consisting of a very wide range of chemical elements and compounds, organic and non-organic, in different physical forms, such as solid, liquid and gas. Said process comprises the following steps:

a) Primary heat treatment of the waste:

Said stage optionally includes evaporation of water, evaporation and carbonization of organic matters from the waste in a controlled oxygen atmosphere preferably at a temperature of less than 1000°C, or in metallic molten bath, said bath preferably being at a temperature of between 500°C and 1600°C. In the presence of hazardous waste, a secondary combustion chamber will destroy all remaining organic matters in the flue gas at a temperature of more than 1200°C at minimum of 2 seconds retention time. The primary heat treatment is conducted at a controlled oxygen level, thus, it may produce controlled and reduced metallic oxides and exchange or reduce the oxygen layer with carbon, and produce carbon residue which acts both as a catalyst in the halogenation reaction and impregnates into a portion the metal phase at elevated temperature which all will facilitate the halogenation reaction.

In order to improve the productivity of the process according to the present invention and to render it ecologically friendly, the flue gas evolving from said primary heat treatment, which typically contains certain amounts of low temperature vaporized material, is subjected to an air purification procedure, according to techniques known in the art, which are preferably selected from scrubbing and filtration, to recover the desired materials from the flue ash, which materials are recycled and processed in the subsequent halogenation stage.

b) Halogenation of the product of the heat treatment:

Material present in the remainder of the waste and optionally, from other sources as well, and in particular, recycled material obtained upon recovering the flue gas by scrubbing and filtration, as described above, which may include metals, metal carbides, metal oxides, other inorganic material and possibly traces of organic material is halogenated at a temperature between ambient temperature and 1500°C, preferably between 300°C and 1500°C, and more preferably between 700°C and 750°C. The carbon remaining in the waste, together with additional carbon, if required, acts as a catalyst in the halogenation. The halogenation reaction is a chlorination reaction, a bromination reaction or a combined chlorination-bromination reaction, and preferably the halogenation reaction is a chlorination reaction. Preferably, all of the above halogenation reactions are performed in the gaseous phase.

The halogenation reaction may be conducted with various mechanical apparatus such as fluidized bed, vibrating grid, walking grid, rotary kiln and multi chamber.

The primary heat treatment chamber and/or the halogenation chamber of the present invention may be each independently be placed horizontally, vertically or in an angle.

According to one preferred embodiment of the present invention, hereinafter referred to as "selective halogenation", the halogenation reaction is carried out at a first temperature at which only some of the waste materials undergo reaction with the halogen, and upon separating the halides obtained, the temperature is varied and the halogenation of the remaining waste materials is completed, or partially completed, at a second temperature. If desired, the temperature is further varied and the procedure is repeated as many times as required. According to another preferred embodiment, the halogenation reaction is conducted at a temperature at which the halides are obtained in different states of matter, e.g., at a temperature in which one or more halides is a gas, and one or more of the other halides is a liquid or solid. One skilled in the art will appreciate that in the two embodiments described above, the halogenation temperature is an important parameter playing a role in accomplishing the separation of the halide products.

c) Separation of the halide products:

such a separation can be preferably done by means of any one or more, or any combination of separations selected from the group consisting of gaseous or liquid fractional deposition, distillation, filtration, settling, selective oxidation, selective halogenation, selective evaporation, selective dissolution, selective extraction, selective chemical vapor deposition, selective electrical behavior and more preferably by means of gaseous fractional deposition (see, e. g. Zelickman A.N. Nikitina L.L. Moscow 1978).

Gaseous fractional deposition may be performed passing all the volatile chlorides, $M_xCl_y$, through one or more solidifying columns. Each has a temperature controlled system that maintains accurate conditions of e.g. temperature. The halide with the highest solidifying temperature solidifies in the first column, whereas the remainder of the halides in the gaseous phase pass to the next columns for further solidifying. In each solidifying column, there will be one or more definite halide materials. The resolution of the separation depends on the accuracy of the solidifying temperature and pressure control, and the dynamics of the gaseous flow. The solidified halides of each column may consist of the solidifying of several halides which are further separated, preferably by recycling each group of halides solidified in a certain column to the gaseous fractional deposition system, wherein accurate conditions are used to improve the resolution of the separation of the halides which have relatively close solidification temperatures. The substantially definite halides obtained thereby are subsequently preferably purified, to remove impurities therefrom. The final separation and purification steps may be accomplished using known technologies of hydrometallurgy and others, such as forming a solution in water or other liquids and filtration, solidification, CVD, etc. (see, e.g. Zelickman A.N. Nikitina L.L. Moscow 1978)

According to a preferred embodiment of the invention, the separation of the halide products comprises selective halogenation, selective evaporation and selective condensation, in any suitable sequence order and as many sequences as required. According to one preferred embodiment, the halogenation is carried out at a first temperature at which only some of the waste materials are converted to halides (selective halogenation), which halides, at said first temperature, are preferably in different states of matter, e.g., some halides are in the vapor phase while others are in a condensed phase (selective evaporation). The evaporated halides are removed from the reaction mixture, and are subsequently separated, preferably using the differences in their condensation temperatures, e.g., by gaseous fractional deposition (selective condensation) and optionally, additional methods known in the art. The reaction mixture, comprising non-evaporated halides together with waste materials which were not halogenated at said first temperature, such as glass and ceramics, is subjected to another separation procedure, to separate the non-evaporated halides therefrom, using methods known in the art, for example, methods based on the differences between the water solubility of said non-evaporated halides and the non-halogenated waste materials. Finally, the non-halogenated waste materials are reacted with halogen at a second temperature, preferably between 900-1500 degrees, or are separated by known hydrometallurgy technologies (see, e.g. Zelickman A.N. Nikitina L.L. Moscow 1978).

Optionally, the raw waste and/or the product of the primary heat treatment is mechanically prepared in a process which includes any one or more of the following steps:

i) mechanical shaping of solid waste into pieces of a size to suit further equipment and productivity.
ii) crushing and/or milling of waste;
iii) briquetting of sludge

According to one embodiment of the present invention, a mixture of 1%-7% bromine in chlorine is used in the halogenation stage in the event that noble metal atoms or compounds such as Ag, Pt and Pd are present.
It is preferable to execute the primary heat treatment at a low as possible temperature in order to substantially reduce the evaporation of metals at said stage and thus reduce particle emission and to obtain an improved recycling efficiency.

During the process of the present invention it is desirable to control parameters such as temperature of primary heat treatment and of halogenation, mass flow to, from and in the primary heat treatment chamber and halogenator in order to achieve higher efficiency. Thus, the waste movement into and in the primary heat treatment chamber may be adjusted in order to improve evaporation of water and/or organic material, carbonization, destruction and/or cracking of organic material and reduction of metal oxides mechanical reduction of the waste. The temperatures in the primary heat treatment chamber may be adjusted in order to obtain more efficient reaction with carbon, and its diffusion; the waste movement in the halogenator may be adjusted in order to achieve more efficient halogenation; the air flow in the primary heat treatment chamber may be adjusted in order to achieve an optimal carbonization, organic destruction, cracking, metal oxide reduction and halogenation. The chlorination chamber temperature may be adjusted in order to evaporate material having low boiling point or sublimation point and later material having higher boiling point or sublimation point, thus performing separation thereof.

Furthermore, the air flow in to the primary heat treatment chamber may be regulated in order to produce carbon in quantities required for optimal halogenation.

An advantage of carbonization resulting in incomplete combustion over that resulting in complete combustion is that the former results in less gasses than the latter, most of the organic matter is cracked into carbon and hydrogen molecules, the formation of CO and $CO_2$ molecules is substantially reduced. The gas flow in incomplete combustion is reduced in temperature, volume and velocity, which substantially reduces the particle emission and simplifies the treatment of the flue gas which consists of heat exchanging, heat recovery and emission control. The lower temperature reduces the amount of volatile inorganic matter in the flue gas. The lower velocity of the gas flow reduces the amount of particles drawn. The substantial reduction of in-flow of air usually required for said incomplete combustion can reduce the amount of emitted flue gas. The volatile organic matter only, can be further incinerated in the secondary chamber, however, said gas will require less oxygen for its incineration and will be almost free of non-gaseous particles. All the above renders the system more environmental friendly especially regarding the "greenhouse effect".

In the event that any of the various fractions of the metal halides which were deposited in the fractional deposition contains a mixture of halides, said mixture may be further separated and purified by known hydrometalurgy technologies and by further fractional deposition of higher resolution.

Most of the waste is recycled by decomposing the material to its basic elements or their halide / oxide derivatives.

The process of the present invention being self-catalyzed, requires little or no addition of material for the purpose of catalysis. According to the present invention, use as catalysts in the recycling phase, is made of elements which exist in most of the wastes to be treated, thus the introduction of catalysts *per se* to the process is minimized.

## BRIEF DESCRIPTION OF THE DRAWING

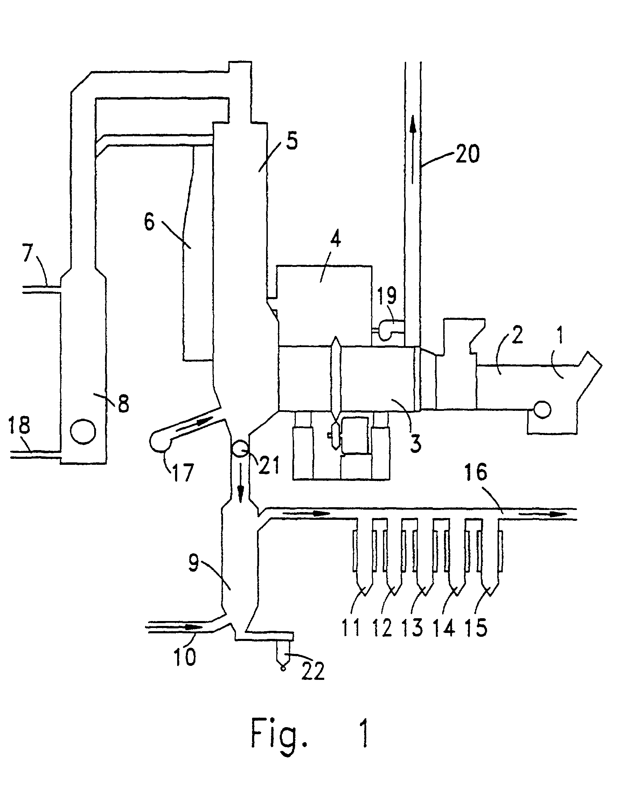

Fig. 1 schematically illustrates an apparatus for a high efficient process for the treatment of multi-element wastes according to the present invention.

## DETAILED DESCRIPTION OF PREFERRED EMBODIMENTS

According to one embodiment of the present invention, the scrap to be treated is inserted to a shredder, 1, and shredded therein. The shredded scrap is loaded by means of a ram loader, 2, into the rotary heat treatment chamber, 3, and the primary heat treatment is performed therein. The gaseous material exiting the primary heat treatment chamber flows to the secondary combustion chamber, 5, where all matters are combusted at an elevated temperature. Additional air is introduced through regulated vent (17). The hot flue gas flows to the heat exchanger (8) into which water is introduced through conduit (7) and withdrawn as a hot stream through conduit (18). The chilled flue gas passes through scrubber (6), where any gaseous emission is absorbed by caustic or lime. The flue gas further passes through the filter bag (4), to remove any particles. The filtered flue gas is released to the atmosphere by means of blower (19), through stack (20). The formation of high pressure within the system is prevented by means of valve (17) and blower (19). The non-gaseous material remaining from the primary heat treatment and the material recovered by the air purification procedure, i.e., the particles collected in the filter bags and the scrubber residues, are introduced into the halogenation chamber, 9, through valve, 21, which is closed during the halogenation reaction. Chlorine, bromine or a mixture thereof are introduced to the halogenation chamber via conduit 10. Condensation columns 11, 12, 13, 14 and 15 are maintained accurately at temperatures $T_1$, $T_2$, $T_3$, $T_4$ and $T_5$, accordingly, under the condition that $T_1 > T_2 > T_3 > T_4 > T_5$, and at an accurately controlled pressure. The gaseous product of the halogenation reaction is passed through said condensation columns, and the metal halides deposit thereon according to their characterized deposition temperature, and are collected and thus separated. The remaining gas which comprises excess halogen gas exits the apparatus through conduit 16. The non-gaseous material which remained in the halogenation chamber is collected and separated if required. Said remaining gas of the halogenation reaction may be recycled back into the halogenation chamber.

According to a preferred embodiment of the present invention metal scrap/waste is reduced to a size that can be introduced to the equipment. Organic waste is treated in a controlled atmosphere or in a molten metallic phase with an oxygen deficiency in order to maintain carbon particles which will serve as catalysts and also reduce the oxide layer on the metallic waste. The gas streams pass through an air-controlled abatement system. The heated inorganic waste or the molten mixture with carbon, if necessary, are then fed to a halogenation reactor either - vertical, horizontal, fixed or fluidized bed. Additional carbon is introduced if needed. The carbon residue from the incineration process is used as a catalyst for the halogenation process.

According to a preferred embodiment, most of the metallic scrap is oxidized after a certain time of being exposed to the air, humidity and sun. This causes a problem to the extent that the oxide layer acts as a passive layer which deactivates the chlorination process. Said problem can be solved according to the present invention by the controlled incineration with oxygen deficiency at elevated temperatures of between 300°C and 1050°C, preferably between 800°C and 850°C. Thus, in the presence of a sufficient amount of carbon in the incinerator, the metal oxides and carbon may be converted to metals and CO and $CO_2$ according to the following empirical formula:

$$M_xO_y + C ---> M + CO + CO_2$$

According to a preferred embodiment the hot gas from secondary combustion chamber may pass through a heat recovery system namely a waste heat boiler, in which the energy is converted into steam and may produce electrical energy.

According to a preferred embodiment, use is made of bromine and/or bromine to accelerate chlorination of noble metals.

According to one preferred embodiment, a portion of the flue gas exiting the primary heat treatment chamber or a portion of the flue gas exiting the secondary heat chamber are introduced to the halogenation chamber. Thus, oxygen or catalysts such as $SO_x$, $NO_x$ and/or carbon compounds, may be recycled.

According to a preferred embodiment of the present invention, the gas flow resulting subsequent to the fractional deposition process, which contains a high percentage of halogen gas, may be recycled back into the halogenator.

## EXAMPLES

### Example 1

500 Grams of unsorted automobile scrap was introduced to the process of the present invention as follows: At first said scrap was shredded to pieces of a length of approximately 10mm. Said pieces were carbonized (in the absence of oxygen) at a temperature of between 600°C-700°C for about 1 hour. Table 1 shows the content of said scrap before and after carbonization.

Table 1

| NAME | ELEMENT CONTENT (wt%) | | | | | | | | | | | |
|---|---|---|---|---|---|---|---|---|---|---|---|---|
| | Fe | Al | Cu | Ni | Mg | Co | Sn | O | Organic | noble metal | Wgt | % |
| Scrap before carbonization | 53 | 18 | 4 | 2 | 4 | 1.5 | 1.3 | 5 | 11 | 0.05 | 500 | 100 |
| Scrap after carbonization | 61 | 21 | 4.5 | 2.0 | 4.6 | 1.7 | 1.5 | - | 2.4 carbon | 0.05 | 432 | 86.4 |

The carbonized material was further chlorinated at a temperature of about 750°C, and the various metal chlorides were separated. Table 2 shows the content of the material after the chlorination reaction .

Table 2

| ELEMENT CONTENT (%) | | | | | | | | | | |
|---|---|---|---|---|---|---|---|---|---|---|
| Weight (gr.) | $FeCl_3$ | $AlCl_3$ | $SnCl_4$ | $NiCl_2$ | CuCl | $CoCl_2$ | noble metal | $MgCl_2$ | Conden. Chamber | Conden. Temp(°C) |
| | 771 | | | 0.18 | | | | | II | 250-300 |
| | | 440 | | | | | | | III | 1000 |
| | | | 14.2 | | | | | | IV | 50 |
| | | | | 14.5 | | | | | I | 600 |
| 130 | 4.26 | | | 3.5 | 28.5 | 15 | 0.46 | 78.3 | V | |
| total: 1370 | 775.26 | 440 | 14.2 | 18.18 | 28.5 | 15 | 0.46 | 78.3 | | |

## Example 2

600 Grams of crushing electronic scrap was introduced to the process of the present invention as follows: At first said scrap was shredded to pieces of a length of approximately 10mm. Said pieces were carbonized (in the absence of oxygen) at a temperature of between 650°C-700°C for about one hour. Table 3 shows the content of said scrap before and after carbonization.

Table 3

| NAME | Cont. Element % | | | | | | | | | | | | | |
|---|---|---|---|---|---|---|---|---|---|---|---|---|---|---|
| | Fe | Cu | Ni | Sn | Pb | Zn | Co | Au | Ag | Pd | O | Org. | C | Wt |
| Scrap before Carbonization | 6 | 20 | 2.5 | 5.0 | 2.0 | 3.0 | 0.25 | 0.025 | 0.15 | 0.018 | 6 | 56 | | 600 |
| Scrap after Carbonization | 13 | 44 | 5 | 11 | 4.4 | 6.6 | 0.5 | 0.055 | 0.33 | 0.04 | - | 2.5 | 4.0 | 270 |

The material treated by means of primary heat treatment was chlorinated at a temperature of about 250°C for about 3 hours, and the various metal chlorides were separated. Table 4 shows the content of the material after the chlorination reaction.

Table 4

| NAME | Wgt. | $FeCl_3$ | $SnCl_4$ | $NiCl_2$ | $ZnCl_2$ | $CoCl_2$ | CuCl | $PlCl_2$ | AuCl g/t | Ag g/t | Pd |
|---|---|---|---|---|---|---|---|---|---|---|---|
| Chloride iron $FeCl_3$ | | 101 | | | | | | | | | |
| Chloride Tin $SnCl_4$ | | | 61.0 | | | | | | | | |
| Chloride Nickel $NiCl_2$ | | | | 23 | | | | | | | |
| Chloride Zinc $ZnCl_2$ | | | | | 32 | | | | | | |
| Residue in Chlorinator | 198 | | | 5.0 | 3.5 | 2.7 | 173 | 14.2 | 0.061 % | 0.17% | 0.058% |
| Total | 415 | 101 | 61.0 | 28 | 35.5 | 2.7 | 173 | 14.2 | | | |

## Example 3

200 Grams of mixture of spent catalyst waste were introduced to the process of the present invention as follows: Said waste was treated by means of primary heat treatment, in the absence of oxygen, at a temperature of about 650°C for about 1.5 hours. Table 5 shows the content of said waste before and after primary heat treatment.

Table 5

| NAME | Cont. element % | | | | | | | | |
|---|---|---|---|---|---|---|---|---|---|
| | Weight total | $WO_2$ | $Ta_2O_5$ | $TiO_2$ | $Co_2O_3$ | Organic | C | SiO2 | $Al_2O_3$ |
| Scrap before Calcination | 200 gr | 38 | 9 | 31.0 | 3.5 | 20 | - | 24 | 14 |
| Scrap after Primary heat treatment | 100 | W 31 | Ta 7 | 31.0 | Co 2.2 | | 4.5 | 16 | 8 |

100 Grams of the calcinated material were chlorinated at a temperature of about 700°C, for about 2 hours, and those from among the various metal chlorides which were evaporated at said temperature, were removed from the reaction mixture and subsequently separated in condensation columns, due to the differences in their condensation temperature. Table 6 shows the content of the material after the chlorination reaction. Alternatively, the evaporated metal chlorides may be all condensed at 20°C on one column, and may be subsequently separated upon raising the column temperature, due to their differences in their evaporation temperature.

Table 6

| NAME | Weight | $WCl_6$ | $TaCl_5$ | $TiCl_4$ | $CoCl_2$ | $SiO_2$ | $Al_2O_3$ | Halog. T °C) | Evapo. T °C) | ondens. T °C) |
|---|---|---|---|---|---|---|---|---|---|---|
| $WCl_6$ | | 64 | | | | | | 650 | 350 | 200-250 |
| $TaCl_5$ | | | 9.0 | | | | | 650 | 240 | 200-250 |
| $TiCl_4$ | | | | 122 | | | | 450 | 136 | 0-20 |
| $CoCl_2$ | | | | | 4.6 | | | 500 | 900 | 500 |
| $SiO_2$ | | | | | | 14 | | 900 | 950 | 500 |
| $Al_2O_3$ | | | | | | | 6.8 | 900 | 950 | 500 |

Table 6   (continued)

| NAME | Weight | WCl$_6$ | TaCl$_5$ | TiCl$_4$ | CoCl$_2$ | SiO$_2$ | Al$_2$O$_3$ | Halog. T °C) | Evapo. T °C) | ondens.T °C) |
|---|---|---|---|---|---|---|---|---|---|---|
| Residue in Chlorinator | 25.0 | | | | 4.6 | 14 | 6.8 | | | |
| Total | 245 | 64 | 9.0 | 122 | 4.6 | 14 | 6.8 | | | |

The remaining residue in the chlorinator comprised a non-evaporated halide (CoCl$_2$) and two oxides, which did not undergo chlorination at 700°C. The CoCl$_2$ was separated from SiO$_2$ and Al$_2$O$_3$, e.g. according to the principle of differences of solubility in water as described in the following equation:

$$CoCl_2 + SiO_2 + Al_2O_3 + H_2O \rightarrow H_2O\ (Co^{++} + 2Cl^-)_{aq} + SiO_{2\ (solid)} + Al_2O_{3\ (solid)}$$

The remaining SiO$_2$ and Al$_2$O$_3$ were introduced to a chlorination chamber at 950°C and were converted to AlCl$_3$ (18g) and SiCl$_4$ (32g).

## Example 4

The primary heat treatment of Example 3 was repeated, and 100g of the material treated by means of primary heat treatment was chlorinated at a temperature of about 900°C, for about 1.5 hours, and the various metal chlorides were separated. Table 7 shows the content of the material after the chlorination reaction.

Table 7

| NAME | Weight | CoCl$_2$ | WCl$_6$ | TaCl$_3$ | AlCl$_3$ | TiCl$_4$ | SiCl$_4$ |
|---|---|---|---|---|---|---|---|
| Chloride Cobalt - CoCl$_2$ | | 4.7 | | | | | |
| Chloride Tungsten - WCl$_6$ | | | 64 | | | | |
| Chloride Tantalum - TaCl$_5$ | | | | 9.0 | | | |
| Chloride Aluminum - AlCl$_3$. | | | | | 18 | | |
| Chloride Titanium - TiCl$_4$ | | | | | | 122 | |
| Chloride Silicon - SiCl$_4$ | | | | | | | 32 |
| Residue | 6.0 | | | | Al$_2$O$_3$ 2.5 | | SiO$_2$ 3.5 |

## Example 5

A mixture of 100g of Nickel-Cadmium batteries was introduced to the process of the present invention as follows: At first said scrap was shredded to pieces of a length of approximately 1-5cm. Said pieces were calcinated (in the absence of oxygen) at a temperature of about 650°C, for about 3 hours. Table 8 shows the content of said scrap before and after primary heat treatment.

Table 8

| Type of scrap | % Ni | %Cd | %Fe | % Organic Silicon |
|---|---|---|---|---|
| Before Primary heat treatment | 20 | 14 | 32 | 34 |
| After Primary heat treatment | 24 | 16 | 34 | SiO$_2$ - 16; C - 20 |

The material treated by means of primary heat treatment was chlorinated at a temperature of about 650°C, for about 1.5 hours, and the various metal chlorides were separated. Table 9 shows the content of the material after the chlorination reaction.

Table 9

| NAME | Weight | FeCl$_3$ | NiCl$_2$ | CdCl$_2$ | SiO$_2$ | C |
|---|---|---|---|---|---|---|
| Chloride Iron FeCl$_3$ | | 96 | | | | |
| Chloride Nickel NiCl$_2$ | | | | | | |
| Chloride Cadmium CdCl$_2$ | | | | | | |
| Residue in Chlorinator | 101 | | 49 | 26 | 16 | 10 |

While some embodiments of the invention have been illustrated, it will be clear that the invention may be carried out by persons skilled in the art with many modifications, variations and adaptations, without departing from the scope of the claims. Thus, e.g., the invention may be applied to scrap or apparatus different from that herein described.

## Claims

1. A highly efficient recovery process for the treatment of multi-element wastes which comprises the steps of:

    a) a primary heat treatment of the waste in the presence of a controlled amount of oxygen, which heat treatment is a carbonization carried out in such a way that any one or more of the actions selected from the group which consists of evaporation of water and/or organic material, destruction and/or cracking of organic material, and reduction of metal oxides to metals and/or metal carbides, are achieved.
    b) after the completion of said heat treatment, halogenation of the product of said heat treatment by treatment with chlorine, bromine or a mixture thereof, in the presence of a halogenation catalyst; and
    c) separation of the metal halide products of said halogenation.

2. A process according to claim 1 in which said multi-element waste is unsorted.

3. A process according to claim 1 in which the waste to be recovered is such that has been mechanically prepared in a process which includes any one or more of the steps of shredding, crushing, milling and briquetting.

4. A process according to claim 1 in which said primary heat treatment further comprises mechanically agitating the waste during said treatment.

5. A process according to claim 1 in which the primary heat treatment is carried out under atmospheric pressure or higher pressure, optionally in the presence of gases, preferably hydrogen, capable of cracking the organic or inorganic material.

6. A process according to claim 1 in which at least a portion of the heat energy afforded in the primary heat treatment is used in the halogenation reaction.

7. A process according to claim 1 in which at least a portion of the product of the primary heat treatment is used as a catalyst in the halogenation reaction.

8. A process according to claim 7 in which said products to be used as catalysts are selected from the group which consists of carbon, bromine, carbon, CO, CO$_2$ and SO$_x$ and NO$_x$ compounds.

9. A process according to claim 1 wherein the primary heat treatment is performed in an oven.

10. A process according to claim 9 wherein said oven is at a temperature of less than about 1000°C.

11. A process according to claim 1 wherein the primary heat treatment is performed in a metallic molten bath.

12. A process according to claim 11 wherein said molten bath is at a temperature of between 500°C and 1600°C.

13. A process according to claim 1 which further comprises a secondary heat treatment comprising heating the gaseous flow which results from the primary heat treatment to a temperature of more than 1200°C.

14. A process according to claim 1 in which said halogenation step further comprises mechanically agitating the waste during said step.

15. A process according to claim 1 in which the halogenation reaction is performed at a temperature of between ambient temperature and 1500°C.

16. A process according to claim 1 in which the halogenation reaction is performed at a temperature of between 300°C and 1500°C, and preferably between 700°C and 750°C.

17. A process according to claim 1 in which the waste comprises a substantial percentage of any of the metals selected from the group which consists of Ag, Pt and Pd, and the halogenation reaction is performed by using a mixture of bromine and chlorine.

18. A process according to claim 17 in which said mixture of chlorine and bromine comprises between 93% and 99% chlorine and the remainder is bromine.

19. A process according to claim 1 in which at least a portion of the excess halogen gas remaining from the halogenation reaction is recycled back to the halogenation chamber.

20. A process according to claim 1 in which the separation of the metal halides is by means of any one or more of the group selected of gaseous or liquid fractional deposition, distillation, fractional distillation, filtration, selective chemical vapor depisition, settling, selective oxidation, selective halogenation, selective evaporation, selective dissolution and selective extraction.

21. An apparatus for a high efficient recovery process for the treatment of multi-element wastes in accordance with claim 1, which comprises:

> I) a primary heat treatment chamber (3);
> II) a halogenation chamber (9); and
> III) a separation unit (11 to 15) connected to said halogenation chamber;
> IV) said primary heat treatment chamber comprising an inlet (2) for said wastes, a flue-gas outlet (20) and means of heating; and
> V) said halogenation chamber comprising a means of heating, an inlet for the heat treated wastes, a halogen inlet (10) and an outlet (16).

22. An apparatus according to claim 21 in which the flue-gas outlet of said primary heat treatment chamber is connected to said halogenation chamber by means of a conduit, which comprises a valve.

23. An apparatus according to claim 21 in which said separation system comprises one or more of the units selected from the group which consists of fractional deposition unit, distiller, filter, settler, selective chemical vapor deposition unit, selective oxidation chamber, selective halogenation chamber, evaporation chamber and selective dissolution unit or any combination thereof.

24. A apparatus according to claim 23, wherein the separation system comprises fractional deposition unit or selective chemical vapor deposition unit.

25. An apparatus according to claim 21 in which said separation system is a gaseous fractional deposition system; the inlet of which is connected to the outlet of said halogenator, by means of a conduit.

26. An apparatus according to claim 25 in which the outlet pipe comprised in the fractional deposition system is connected directly to the halogenation chamber, and said pipe comprises a one-way valve in the direction from the fractional deposition system to the halogenation chamber.

27. An apparatus according to claim 21 which further comprises an secondary combustion chamber (5) and a heat exchanger (8); said secondary combustion chamber comprising a means of heating, a gas inlet, an air inlet, and a flue gas outlet; said gas inlet of said secondary combustion chamber being connected by means of a conduit to the flue gas outlet of said primary heat chamber; said heat exchanger comprising an inlet and an outlet; the flue gas outlet of said secondary combustion chamber being connected by means of a conduit to the inlet of said heat exchanger.

**28.** An apparatus according to claim 27 which further comprises a scrubber, a filter, a blower and a stack; said scrubber comprising an inlet and ain outlet; the outlet of said heat exchanger being connected, by means of a conduit to the inlet of said scrubber; said filter comprising an inlet and an outlet; the outlet of said scrubber being connected, by means of a conduit to the inlet of said filter; said blower comprising an inlet and an outlet; the outlet of said filter being connected, by means of a conduit to the inlet of said blower; said stack comprising an inlet and an outlet; the outlet of said blower being connected, by means of a conduit to the inlet of said stack.

**29.** An apparatus according to claim 28, wherein the scrubber and the filter are connected to the halogenation chamber by means of conduits, to recycle material recovered and collected by said scrubber and filter to said halogenation chamber.

**30.** An apparatus according to claim 28 in which said filter is selected from the group which consists of fabric filter, electrostatic filter, and high temperature filter.

**31.** An apparatus according to claim 23 which further comprises any one or more of the units selected from the group which consists of shredder, crusher, mill, briquetter doser, and sludge feeder, which are connected to the primary heat treatment chamber; providing that the outlet of the unit connected to the primary heat treatment chamber is connected to the inlet of said primary heat treatment chamber by means of a conduit; further providing that in the event that said apparatus comprises two or more of the above units, said units are connected succeedingly, in any combination and/or order, and are connected so by means of conduits.

**32.** An apparatus according to claim 21 which further comprises any one or more of the units selected from the group which consists of shredder, crusher, mill, briquetter, doser and sludge feeder which are connected between the primary heat treatment chamber and the halogenation chamber; providing that the outlet of the unit which is connected to the halogenation chamber is connected to the inlet of said halogenation chamber by means of a conduit; further providing that the outlet of the - primary heat treatment chamber is connected to the inlet of the unit which is connected to said primary heat treatment chamber by means of a conduit; further providing that in the event that said apparatus comprises two or more of the above units, said units are connected succeedingly, in any combination and/or order, and are connected so by means of conduits.

**33.** An apparatus according to claim 21 in which said primary heat treatment chamber further comprises a means of agitating material.

**34.** An apparatus according to claim 33 in which said means of agitating is a means selected from the group which consists of fixed fluidized bed vibrating grid, walking grid and rotary kiln.

**35.** An apparatus according to claim 21, wherein the primary heat treatment-chamber comprises a pressurized vessel.

**36.** An apparatus according to claim 21 in which said halogenation chamber further comprises a means of agitating material.

**37.** An apparatus according to claim 36, in which said means of agitating is a means selected from the group which consists of fixed fluidized bed vibrating grid, walking grid and rotary kiln.

**38.** An apparatus according to claim 21, wherein the halogenation chamber comprises a pressurized vessel.

**39.** An apparatus according to claim 21, in which the primary heat treatment chamber is placed horizontally, vertically or at any other advantageous angle.

**40.** An apparatus according to claim 21 in which the halogenation chamber is placed horizontally, vertically or at any other advantageous angle.

## EP 1 051 527 B1

**Patentansprüche**

1.  Ein sehr wirksames Wiedergewinnungsverfahren zur Behandlung von Multi-Element-Abfällen umfassend die Schritte:

    a) einer primären Wärmebehandlung des Abfalls in Anwesenheit einer kontrollierten Sauerstoffmenge, wobei die Hitzebehandlung eine Verkohlung ist, durchgeführt so, daß eine oder mehrere der folgenden Wirkungen erzielt werden, ausgewählt aus der Gruppe bestehend aus Evaporation von Wasser und/oder organischen Materials, Zersetzen und/oder Cracken von organischem Material und Reduktion von Metalloxiden zu Metallen und/oder Metallcarbiden,

    b) nach Abschließen dieser Wärmebehandlung Halogenieren des Wärmebehandlungsprodukts durch Behandeln mit Chlor, Brom oder eine Mischung davon in Anwesenheit eines Halogenierungskatalysators und

    c) Trennen der Metallhalogenid-Produkte der Halogenierung.

2.  Verfahren gemäß Anspruch 1, wobei der Multi-Element-Abfall unsortiert ist.

3.  Verfahren gemäß Anspruch 1, wobei der wiederzugewinnende Abfall so ist, daß er mechanisch in einem Verfahren bearbeitet wurde, einschließlich einem oder mehreren der Schritte des Schredderns, Brechen, Mahlen und Brikettieren.

4.  Verfahren gemäß Anspruch 1, wobei die erste Wärmebehandlung weiterhin umfaßt das mechanische Rühren des Abfalls während der Behandlung.

5.  Verfahren gemäß Anspruch 1, bei dem die primäre Wärmebehandlung durchgeführt wird unter atmosphärischem Druck oder höherem Druck gegebenenfalls in Anwesenheit von Gasen, bevorzugt Wasserstoff, die in der Lage sind organische oder anorganische Materialien zu cracken.

6.  Verfahren gemäß Anspruch 1, wobei mindestens ein Teil der bei der Wärmebehandlung erhaltenen Wärmeenergie für die Halogenierungsreaktion verwendet wird.

7.  Verfahren gemäß Anspruch 1, wobei mindestens ein Teil des Produkts der ersten Wärmebehandlung verwendet wird als ein Katalysator bei der Halogenierungsreaktion.

8.  Verfahren gemäß Anspruch 7, bei dem die als Katalysatoren zu verwendenden Produkte ausgewählt sind aus der Gruppe bestehend aus Kohlenstoff, Brom, Kohlenstoff-, CO, $CO_2$ und $SO_x$- und $NO_x$-Verbindungen.

9.  Verfahren gemäß Anspruch 1, wobei die primäre Wärmebehandlung in einem Ofen durchgeführt wird.

10. Verfahren gemäß Anspruch 9, wobei dieser Ofen eine Temperatur von weniger als ca. 1000°C hat.

11. Verfahren gemäß Anspruch 1, wobei die primäre Wärmebehandlung in einer Metallschmelze durchgeführt wird.

12. Verfahren gemäß Anspruch 11, wobei die Metallschmelze eine Temperatur von ca. 500°C bis 1600°C hat.

13. Verfahren gemäß Anspruch 1, weiterhin umfassend eine zweite Wärmebehandlung, umfassend das Erhitzen des Gasstroms, der von der ersten Wärmebehandlung stammt, auf eine Temperatur von mehr als 1200°C.

14. Verfahren gemäß Anspruch 1, wobei der Halogenierungsschritt weiterhin umfaßt, das mechanische rühren des Abfalls während dieses Schritts.

15. Verfahren gemäß Anspruch 1, wobei die Halogenierungsreaktion bei einer Temperatur von Umgebungstemperatur bis 1500°C durchgeführt wird.

16. Verfahren gemäß Anspruch 1, wobei die Halogenierungsreaktion bei einer Temperatur von 300°C bis 1500°C und bevorzugt zwischen 700°C und 750°C durchgeführt wird.

17. Verfahren gemäß Anspruch 1, wobei der Abfall umfaßt einen wesentlichen Prozentsatz an irgendwelchen Metallen, ausgewählt aus der Gruppe bestehend aus Ag, Pt und Pd und die Halogenierungsreaktion wird durch Verwenden einer Mischung von Brom und Chlor durchgeführt.

18. Verfahren gemäß Anspruch 17, wobei die Mischung aus Chlor und Brom zwischen 93 % und 99 % Chlor umfaßt und der Rest Brom ist.

19. Verfahren gemäß Anspruch 1, wobei mindestens ein Teil des überschüssigen Halogengases, welches bei der Halogenierungsreaktion übrigbleibt, zu der Halogenierungskammer zurückrecyclet wird.

20. Verfahren gemäß Anspruch 1, wobei die Trennung der Metallhalogenide erfolgt mittels einem oder mehreren Mittel(n) aus der Gruppe bestehend aus gas- oder flüssig-fraktionierte Sedimentierung, Destillation, fraktionierte Destillation, Filtration, selektiver chemischer Dampfablagerung, Absetzen, selektiver Oxidierung, selektiver Halogenierung, selektiver Verdampfung, selektiver Lösung und selektiver Extraktion.

21. Vorrichtung für einen sehr effizienten Wiedergewinnungsprozeß zur Behandlung von Multi-Element-Abfällen gemäß Anspruch 1, umfassend:

   i) eine primäre Wärmebehandlungskammer (3);

   ii) eine Halogenierungskammer (9); und

   iii) eine Trennungseinheit (11 bis 15) verbunden mit der Halogenierungskammer;

   iv) die primäre Wärmebehandlungskammer umfaßt einen Einlaß für die Abfälle, einen Verbrennungsgasauslaß (20) und Vorrichtungen zum Erhitzen; und

   v) die Halogenierungskammer umfaßt Vorrichtungen zum Erhitzen, ein Einlaß für die wärmebehandelten Abfälle, einen Einlaß für das Halogen (10) und einen Auslaß (16).

22. Vorrichtung gemäß Anspruch 21, wobei der Verbrennungsgasauslaß dieser primären Wärmebehandlungskammer mit der Halogenierungskammer, mit einer Leitung verbunden ist, umfassend ein Ventil.

23. Vorrichtung gemäß Anspruch 21, wobei das Trennungssystem umfaßt ein oder mehrere Einheiten ausgewählt aus der Gruppe bestehend aus fraktioneller Sedimentierungseinheit, Destillator, Filter, Absetzer, selektiver chemischer Dampfsedimentiereinheit, selektiver Oxidationskammer, selektiver Halogenierungskammer, Verdampfungskammer und selektiver Lösungseinheit oder irgendeiner Kombination davon.

24. Vorrichtung gemäß Anspruch 23, wobei das Trennungssystem umfaßt fraktionelle Sedimentierungseinheit oder selektive chemische Verdampfungssedimentierungseinheit.

25. Vorrichtung gemäß Anspruch 21, wobei das Trennungssystem ein Gasfraktionierungs-Sedimentierungssystem ist; der Einlaß davon ist verbunden mit dem Auslaß des Halogenisators mittels einer Leitung.

26. Vorrichtung gemäß Anspruch 25, wobei die Auslaßröhre im fraktionellen Sedimentierungssystem direkt verbunden ist mit der Halogenierungskammer und diese Leitung umfaßt ein Einwegventil in Richtung vom fraktionellen Sedimentierungssystem zur Halogenierungskammer.

27. Vorrichtung gemäß Anspruch 21, weiterhin umfassend eine zweite Verbrennungskammer (5) und einen Wärmeaustauscher (8); die zweite Verbrennungskammer umfaßt Mittel zum Erhitzen, einen Gaseinlaß, einen Lufteinlaß und einen Verbrennungsgasauslaß; der Gaseinlaß der zweiten Verbrennungskammer ist verbunden mittels einer Leitung mit dem Verbrennungsgasauslaß der ersten Erhitzungskammer; der Wärmeaustauscher umfaßt einen Einlaß und einen Auslaß; der Verbrennungsgasauslaß der zweiten Verbrennungskammer ist mit einer Leitung verbunden mit dem Einlaß des Wärmeaustauschers.

28. Vorrichtung gemäß Anspruch 27, weiterhin umfassend einen Wäscher, einen Filter, ein Gebläse und einen Kamin; der Wäscher umfaßt einen Einlaß und einen Auslaß; der Auslaß des Wärmeaustauschers ist mittels einer Leitung verbunden mit dem Einlaß des Wäschers; der Filter umfaßt einen Einlaß und einen Auslaß; der Auslaß des Wäschers ist mittels Leitung verbunden mit dem Einlaß des Filters; das Gebläse umfaßt einen Einlaß und einen Auslaß; der Auslaß des Filters ist mittels der Leitung verbunden mit dem Einlaß des Gebläses; der Kamin umfaßt einen Einlaß und einen Auslaß; der Auslaß des Gebläses ist mittels einer Leitung verbunden mit dem Einlaß des Kamins.

29. Vorrichtung gemäß Anspruch 28, wobei der Wäscher und der Filter mittels Leitungen mit der Halogenierungskammer verbunden sind, um Material, das gewonnen und gesammelt wurde, durch den Wäscher und den Filter zu der Halogenierungskammer zu recyclen.

30. Vorrichtung gemäß Anspruch 28, wobei der Filter ausgewählt ist aus der Gruppe bestehend aus Gewebefilter, elektrostatischer Filter und Hochtemperaturfilter.

31. Vorrichtung gemäß Anspruch 23, weiterhin umfassend ein oder mehrere Einheiten ausgewählt aus der Gruppe bestehend aus einem Schredder, Crusher, Mühle, Brikettierungseinheit und Schlammzuführer, die verbunden sind mit der ersten Wärmebehandlungskammer; vorausgesetzt, daß der Auslaß der mit der ersten Wärmebehandlungskammer verbundenen Einheit verbunden ist mit dem Einlaß der ersten Wärmebehandlungskammer mittels einer Leitung; weiterhin vorausgesetzt, daß im Falle daß die Vorrichtung zwei oder mehrere der obigen Einheiten umfaßt, diese Einheiten in Reihe verbunden sind in irgendeiner Kombination und/oder Reihenfolge und mittels Leitungen verbunden sind.

32. Vorrichtung gemäß Anspruch 21, weiterhin umfassend ein oder mehrere Einheiten ausgewählt aus der Gruppe bestehend aus einem Schredder, Crusher, Mühle, Brikettierungseinheit und Schlammzuführer, die verbunden sind zwischen der ersten Wärmebehandlungskammer und der Halogenierungskammer; vorausgesetzt, daß der Auslaß der Einheit, die mit der Halogenierungskammer verbunden ist mit dem Einlaß der Halogenierungskammer mittels einer Leitung; weiterhin vorausgesetzt, daß der Auslaß der ersten Wärmebehandlungskammer mit dem Einlaß der Einheit verbunden ist, die an diese erste Wärmebehandlungskammer mittels einer Leitung gebunden ist und weiter vorausgesetzt, im Falle daß die Vorrichtung zwei oder mehrere der obigen Einheiten umfaßt, diese Einheiten in Reihe verbunden sind in irgendeiner Kombination und/oder Reihenfolge und mittels Leitungen verbunden sind.

33. Vorrichtung gemäß Anspruch 21, wobei die primäre Wärmebehandlungskammer weiterhin eine Vorrichtung zum Rühren von Material umfaßt.

34. Vorrichtung gemäß Anspruch 33, wobei diese Rührvorrichtungen ausgewählt werden aus der Gruppe bestehend aus festen Wirbelbetten mit vibrierendem Gitter, bewegendem Gitter und rotierenden Kiln.

35. Vorrichtung gemäß Anspruch 21, wobei die primäre Wärmebehandlungskammer einen unter Druck stehende Röhre umfaßt.

36. Vorrichtung gemäß Anspruch 21, wobei die Halogenierungskammer weiterhin eine Vorrichtung zum Rühren des Materials umfaßt.

37. Vorrichtung gemäß Anspruch 36, wobei diese Rührvorrichtungen ausgewählt werden aus der Gruppe bestehend aus festen Wirbelbetten mit vibrierendem Gitter, bewegendem Gitter und rotierenden Kiln.

38. Vorrichtung gemäß Anspruch 21, wobei die primäre Wärmebehandlungskammer einen unter Druck stehende Röhre umfaßt.

39. Vorrichtung gemäß Anspruch 21, wobei die primäre Wärmebehandlungskammer horizontal, vertikal oder in irgendeinem anderen vorteilhaften Winkel angebracht ist.

40. Vorrichtung gemäß Anspruch 21, wobei die Halogenierungskammer horizontal, vertikal oder in irgendeinem anderen vorteilhaften Winkel angebracht ist.

**Revendications**

1. Procédé de récupération à haute efficacité pour le traitement de déchets à éléments multiples, comprenant les étapes suivantes :

EP 1 051 527 B1

a) un premier traitement des déchets à la chaleur en présence d'une quantité contrôlée d'oxygène, lequel premier traitement étant une carbonisation effectuée de telle sorte que l'une quelconque ou plusieurs des actions choisies dans le groupe constitué par l'évaporation de l'eau et/ou de matière organique, la destruction et/ou le craquage de matière organique, et la réduction d'oxydes métalliques en métaux et/ou carbures de métaux, sont réalisées ;

b) après réalisation complète dudit premier traitement à la chaleur, une halogénation du produit dudit premier traitement à la chaleur par le chlore, le brome, ou un mélange, en présence d'un catalyseur d'halogénation ;

c) une séparation des halogénures métalliques produits par ladite halogénation.

2. Procédé selon la revendication 1, dans lequel lesdits déchets à éléments multiples ne sont pas triés.

3. Procédé selon la revendication 1, dans lequel les déchets à récupérer sont tels qu'ils ont été préparés mécaniquement dans un procédé incluant l'une quelconque ou plusieurs des étapes de déchiquetage, concassage, broyage et agglomération.

4. Procédé selon la revendication 1, dans lequel ledit premier traitement à la chaleur comprend en outre l'agitation mécanique des déchets au cours dudit traitement.

5. Procédé selon la revendication 1, dans lequel le premier traitement à la chaleur est effectué sous pression atmosphérique ou sous pression plus élevée, le cas échéant en présence de gaz, de préférence l'hydrogène, capable de craquer les matières organiques ou inorganiques.

6. Procédé selon la revendication 1, dans lequel au moins une partie de l'énergie thermique produite dans le premier traitement à la chaleur est utilisée dans la réaction d'halogénation.

7. Procédé selon la revendication 1, dans lequel au moins une partie du produit provenant du premier traitement à la chaleur est utilisée comme catalyseur dans la réaction d'halogénation.

8. Procédé selon la réaction 7, dans lequel lesdits produits à utiliser comme catalyseurs sont choisis dans le groupe constitué par le carbone, le brome, CO, $CO_2$ et des composés SOx et Nox.

9. Procédé selon la revendication 1, dans lequel le premier traitement à la chaleur est réalisé dans un four.

10. Procédé selon la revendication 9, dans lequel ledit four est à une température inférieure à environ 1000°C.

11. Procédé selon la revendication 1, dans lequel le premier traitement à la chaleur est réalisé dans un bain de métal fondu.

12. Procédé selon la revendication 11, dans lequel ledit bain de métal fondu est à une température entre 500°C et 1600°C.

13. Procédé selon la revendication 1, comprenant en outre un second traitement à la chaleur comprenant le chauffage d'un flux gazeux provenant du premier traitement à la chaleur, à une température supérieure à 1200°C.

14. Procédé selon la revendication 1, dans lequel l'étape d'halogénation comprend en outre l'agitation mécanique des déchets au cours de ladite étape.

15. Procédé selon la revendication 1, dans lequel la réaction d'halogénation est réalisée à une température entre la température ambiante et 1500°C.

16. Procédé selon la revendication 1, dans lequel la réaction d'halogénation est réalisée à une température entre 300°C et 1500°C, et de préférence entre 700°C et 750°C.

17. Procédé selon la revendication 1, dans lequel les déchets comprennent un pourcentage substantiel de l'un quelconque des métaux choisis dans le groupe constitué par Ag, Pt et Pd, et la réaction d'halogénation est réalisée en utilisant un mélange de brome et de chlore.

18. Procédé selon la revendication 17, dans lequel ledit mélange de chlore et de brome comprend entre 93% et 99%

18

de chlore et le reste en brome.

**19.** Procédé selon la revendication 1, dans lequel au moins une partie de l'excès d'halogènes gazeux restant de la réaction d'halogénation est recyclé dans la chambre d'halogénation.

**20.** Procédé selon la revendication 1, dans lequel la séparation des halogénures métalliques se fait au moyen de l'une ou l'autre ou plusieurs des actions choisies dans le groupe constitué par le dépôt fractionné liquide ou gazeux, la distillation, la distillation fractionnée, la filtration, le dépôt sélectif chimique en phase vapeur, la décantation, l'oxydation sélective, l'halogénation sélective, l'évaporation sélective, la dissolution sélective et l'extraction sélective.

**21.** Appareil pour procédé de récupération à haute efficacité pour le traitement de déchets à éléments multiples selon la revendication 1, comprenant

    I) une chambre de premier traitement à la chaleur (8) ;
    II) une chambre d'halogénation (9); et
    III) une unité de séparation (11 à 15) communiquant avec ladite chambre d'halogénation;
    IV) ladite chambre de premier traitement à la chaleur comprenant une entrée (2) pour lesdits déchets, une sortie d'effluents gazeux (20) et des moyens de chauffage ; et
    V) ladite chambre d'halogénation comprenant des moyens de chauffage, une entrée pour les déchets traités à la chaleur, une entrée d'halogène (10) et une sortie (16).

**22.** Appareil selon la revendication 21, dans lequel la sortie d'effluents gazeux de ladite chambre de premier traitement à la chaleur communique avec ladite chambre d'halogénation au moyen d'un conduit qui comprend un soupape.

**23.** Appareil selon la revendication 21, dans lequel ledit système de séparation comprend une ou plusieurs des unités choisies dans le groupe constitué par une unité de dépôt fractionné, un distillateur, un filtre, un décanteur, une unité de dépôt sélectif chimique en phase vapeur, une chambre d'oxydation sélective, une chambre d'halogénation sélective, une chambre d'évaporation et une unité de dissolution sélective, ou toute combinaison de ces unités.

**24.** Appareil selon la revendication 23, dans lequel le système de séparation comprend une unité de dépôt fractionné ou une unité de dépôt chimique sélectif en phase vapeur.

**25.** Appareil selon la revendication 21, dans lequel ledit système de séparation est un système de dépôt gazeux fractionné, dont l'entrée communique avec la sortie dudit appareil d'halogénation par un conduit.

**26.** Appareil selon la revendication 25, dans lequel le tuyau de sortie du système de dépôt fractionné communique directement avec la chambre d'halogénation, et ledit tuyau comprend une soupape unidirectionnelle dans le sens du système de dépôt fractionné vers la chambre d'halogénation.

**27.** Appareil selon la revendication 21, comprenant en outre une chambre de combustion secondaire (5) et un échangeur de chaleur (8), ladite chambre de combustion secondaire comprenant des moyens de chauffage, une entrée de gaz, une entrée d'air et une sortie d'effluents gazeux, ladite entrée de gaz de ladite chambre de combustion secondaire communiquant par un conduit avec la sortie des effluents gazeux de la dite chambre de premier traitement à la chaleur, ledit échangeur de chaleur comprenant une entrée et une sortie, la sortie des effluents gazeux de la dite chambre de combustion secondaire communiquant par un conduit avec l'entrée dudit échangeur de chaleur.

**28.** Appareil selon la revendication 27, comprenant en outre un épurateur, un filtre, une soufflerie et une cheminée, ledit épurateur comprenant une entrée et une sortie, la sortie dudit échangeur de chaleur communiquant par un conduit avec l'entrée dudit épurateur, ledit filtre comprenant une entrée et une sortie, la sortie dudit épurateur communiquant par un conduit avec l'entrée dudit filtre, ladite soufflerie comprenant une entrée et une sortie, la sortie dudit filtre communiquant par un conduit avec l'entrée de ladite soufflerie, ladite cheminée comprenant une entrée et une sortie, la sortie de ladite soufflerie communiquant par un conduit avec l'entrée de ladite cheminée.

**29.** Appareil selon la revendication 28, dans lequel l'épurateur et le filtre communiquent avec la chambre d'halogénation par un conduit pour recycler les matières recueillies par lesdits épurateur et filtre vers ladite chambre d'halogénation.

**30.** Appareil selon la revendication 28, dans lequel ledit filtre est choisi dans le groupe constitué par un filtre en tissu, un filtre électrostatique et un filtre à haute température.

**31.** Appareil selon la revendication 23, comprenant en outre l'une quelconque ou plusieurs des unités choisies dans le groupe constitué par un déchiqueteur, un broyeur, un moulin, un chargeur à agglomérats, un doseur et un chargeur à boues, qui communiquent avec la chambre de premier traitement à la chaleur, la sortie de l'unité connectée à la chambre de premier traitement à la chaleur communiquant avec l'entrée de ladite chambre de premier traitement à la chaleur au moyen d'un conduit, et en outre, dans le cas où ledit appareil comprend au moins deux unités, lesdites unités étant connectées en série, suivant toute combinaison et/ou ordre, et communiquent par des conduits.

**32.** Appareil selon la revendication 21, comprenant en outre l'une quelconque ou plusieurs des unités choisies dans le groupe constitué par un déchiqueteur, un broyeur, un moulin, un chargeur à agglomérats, un doseur et un chargeur à boues, qui communiquent avec la chambre de premier traitement à la chaleur et la chambre d'halogénation, la sortie de l'unité connectée à la chambre d'halogénation communiquant avec l'entrée de ladite chambre d'halogénation par un conduit, et en outre la sortie de ladite chambre de premier traitement à la chaleur communiquant avec l'entrée de l'unité connectée à ladite chambre de premier traitement à la chaleur au moyen d'un conduit, et en outre, dans le cas où ledit appareil comprend au moins deux unités, lesdites unités étant connectées en série, suivant toute combinaison et/ou ordre, et communiquent par des conduits.

**33.** Appareil selon la revendication 21, dans lequel ladite chambre de premier traitement à la chaleur comprend en outre des moyens pour agiter les matières.

**34.** Appareil selon la revendication 33, dans lequel lesdits moyens d'agitation sont choisis dans le groupe constitué par une grille vibrante pour lit fluidisé fixe, une grille mobile et un four rotatif.

**35.** Appareil selon la revendication 21, dans lequel la chambre de premier traitement à la chaleur comprend un caisson pressurisé.

**36.** Appareil selon la revendication 21, dans lequel ladite chambre d'halogénation comprend en outre des moyens pour agiter les matières.

**37.** Appareil selon la revendication 36, dans lequel lesdits moyens d'agitation sont choisis dans le groupe constitué par une grille vibrante pour lit fluidisé fixe, une grille mobile et un four rotatif.

**38.** Appareil selon la revendication 21, dans lequel la chambre d'halogénation comprend un caisson pressurisé.

**39.** Appareil selon la revendication 21, dans lequel la chambre de premier traitement à la chaleur est disposée horizontalement, verticalement ou suivant tout autre angle avantageux.

**40.** Appareil selon la revendication 21, dans lequel la chambre d'halogénation est disposée horizontalement, verticalement ou suivant tout autre angle avantageux.

Fig. 1